# EUROPEAN PATENT SPECIFICATION

(11) **EP 3 054 229 B1**
(45) Date of publication and mention of the grant of the patent: **28.11.2018**
(21) Application number: 16154412.7
(22) Date of filing: 05.02.2016
(51) Int. Cl.: F25B 49/02, F24F 11/30, F25B 13/00

(54) **AIR CONDITIONER**
KLIMAANLAGE
CLIMATISEUR

(30) Priority: 09.02.2015 KR 20150019743
(43) Date of publication of application: 10.08.2016
(73) Proprietor: LG Electronics Inc., Seoul 07336 (KR)
(72) Inventor: SONG, Joonkeol, 08592 Seoul (KR); KIM, Sunghwan, 08592 Seoul (KR); KIM, Daehee, 08592 Seoul (KR)
(74) Representative: Vossius & Partner Patentanwälte Rechtsanwälte mbB

(56) References cited:
- EP-A2- 1 087 184
- US-A1- 2013 116 834

## Description

The present invention relates to an air conditioner, and more particularly to an air conditioner that is capable of determining an operation state or abnormality of a compressor or a fan in the air conditioner.

An air conditioner discharges cool air or hot air into a room to adjust indoor temperature and to purify indoor air, thereby providing a more comfortable indoor environment to people. In general, the air conditioner includes an indoor unit that is installed in the room, the indoor unit including an indoor heat exchanger, and an outdoor unit for supplying a refrigerant to the indoor unit, the outdoor unit including a compressor and an outdoor heat exchanger.

The air conditioner with the above-stated construction is controlled in a state in which the air conditioner is divided into the indoor unit, which includes the indoor heat exchanger, and the outdoor unit, which includes the compressor and the outdoor heat exchanger. Specifically, the compressor or the heat exchanger are controlled to be powered on or off to operate the air conditioner. In addition, the air conditioner may be configured such that at least one indoor unit is connected to the outdoor unit. Depending on a required operation state of the air conditioner, the refrigerant is supplied to the indoor unit such that the air conditioner is operated in a cooling mode or a heating mode.

The air conditioner performs a cooling operation or a heating operation based on the flow of the refrigerant. In the cooling operation, a high-temperature, high-pressure liquid refrigerant from the compressor in the outdoor unit is supplied to the indoor unit via the outdoor heat exchanger in the outdoor unit. In the indoor heat exchanger in the indoor unit, the refrigerant is expanded and evaporated. As a result, the temperature of the surrounding air is lowered. As an indoor unit fan is rotated, cool air is discharged into the room. In the heating mode, on the other hand, a high-temperature, high-pressure gas refrigerant from the compressor in the outdoor unit is supplied to the indoor unit. In the indoor heat exchanger in the indoor unit, the high-temperature, high-pressure gas refrigerant is liquefied and discharged. As a result, the temperature of the surrounding air is raised. As an indoor unit fan is rotated, hot air is discharged into the room.

The air conditioner with the above-stated construction cannot be operated any longer if the compressor or a fan motor is abnormal.

Conventionally, insulation resistance of the compressor or the fan motor is measured in order to determine whether the compressor of the air conditioner is abnormal. However, this measurement is possible only after the compressor or the fan motor of the air conditioner has broken down, but it is not possible to monitor the lifespan of the compressor or the fan motor or the progress of the breakdown of the compressor or the fan motor before the compressor or the fan motor of the air conditioner has broken down.

In addition, since the insulation resistance of the compressor or the fan motor is measured, it is possible to sense only abnormality generated in windings of the compressor or the fan motor, but it is not possible to sense breakdowns generated due to the other causes.

That is, in a case in which the compressor is abnormal, the air conditioner cannot perform cooling and heating operations. For this reason, there is a high necessity for a method of monitoring sensing abnormality of the compressor and coping with the sensed abnormality of the compressor.

EP 1 087 184 A2 discloses an air conditioner according to the preamble of claim 1.

It is an object of the present invention to provide an air conditioner that is capable of monitoring an operation state of a compressor in the air conditioner and diagnosing the progress of a breakdown of a compressor and a fan or a breakdown portion. This object is achieved with the features of claim 1. Preferred embodiments are defined in the dependent claims.

The embodiments will be described in detail with reference to the following drawings in which like reference numerals refer to like elements wherein:
FIG. 1 is a view schematically showing the construction of an air conditioner according to the present invention;
FIG. 2 is a view schematically showing the constructions of an outdoor unit and an indoor unit according to the present invention;
FIG. 3 is a block diagram showing a control construction for sensing abnormality of a compressor or a fan motor of the air conditioner according to the present invention;
FIG. 4 is a view schematically showing a sensing unit for sensing abnormality of the compressor or the fan motor according to the present invention;
FIG. 5 is a view showing an installation example of the sensing unit of the air conditioner according to the present invention; and
FIG. 6 is a view showing an example of a warning output from the air conditioner according to the present invention.

The advantages and features of the present invention and the way of achieving them will become apparent with reference to embodiments described below in conjunction with the accompanying drawings. However, the present invention is not limited to embodiments disclosed in the following description but may be embodied in various different forms. The embodiments, which will be described below, of the present invention are provided to complete the disclosure of the present invention and to correctly inform those skilled in the art to which the present invention pertains of the scope of the invention. The present invention is defined only by the scope of the accompanying claims. Throughout the specification, the same components are denoted by the same reference numerals.

Hereinafter, embodiments of the present invention will be described in detail with reference to the accompanying drawings.

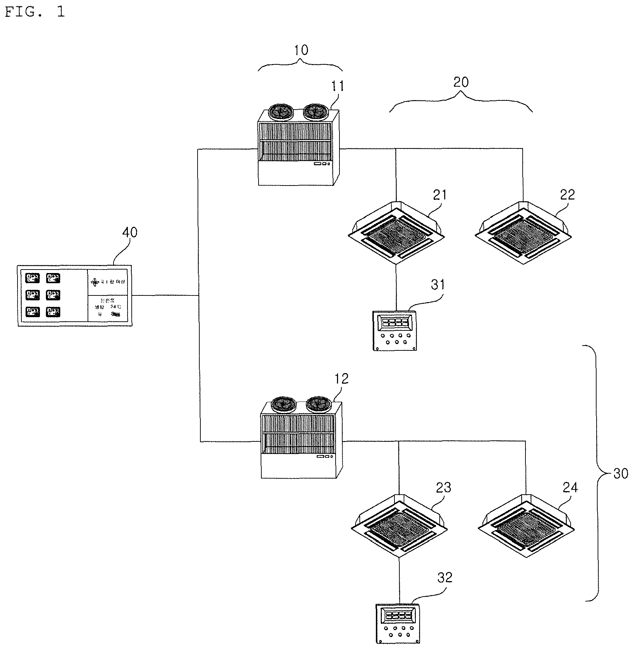

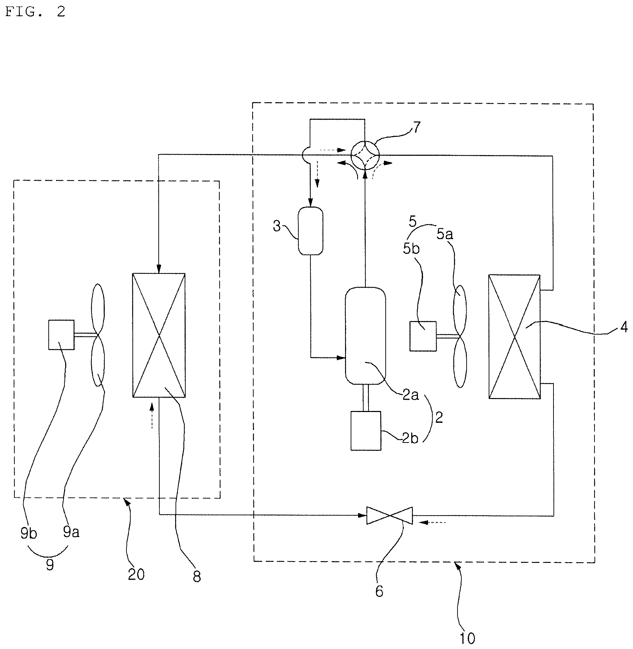

FIG. 1 is a view schematically showing the construction of an air conditioner according to the present invention, and FIG. 2 is a view schematically showing the constructions of an outdoor unit and an indoor unit according to the present invention.

As shown in FIGS. 1 and 2, the air conditioner includes at least one indoor unit 20 (21 to 24) and at least one outdoor unit 10 (11 and 12). In addition, the air conditioner may further include at least one remote controller 30 (31 and 32) connected to the indoor unit 20 for allowing a user to input a command to the indoor unit 20. In addition, the air conditioner may further include a remote control unit 40 connected to the indoor unit 20 and the outdoor unit 10 for monitoring and controlling the operations of the indoor unit 20 and the outdoor unit 10.

Based on the installation type thereof, the air conditioner may be classified as a ceiling mounted type air conditioner, a floor stand type air conditioner, or a wall mounted type air conditioner. In addition to the outdoor unit and the indoor unit, the air conditioner may further include a ventilation unit, an air cleaning unit, a humidification unit, a dehumidification unit, and a heating unit, a description of which will be omitted.

The indoor unit 20 includes a discharge port (not show), through which heat-exchanged air is discharged. In the discharge port is provided an air direction control unit (not shown) for opening and closing the discharge port and for controlling the direction of air discharged through the discharge port. The indoor unit 20 controls the rotational speed of an indoor unit fan to control air that is suctioned and air that is discharged and to adjust the flow rate of air. In addition, the indoor unit 20 may further include an output unit (not shown) for displaying an operation state and setting information of the indoor unit 20 and an input unit (not shown) for allowing a user to input setting data.

The outdoor unit 10 is operated in a cooling mode or a heating mode according to the demand of the indoor unit 20, which is connected to the outdoor unit 10, or a control command from the remote control unit 40. In addition, the outdoor unit 10 supplies a refrigerant to the indoor unit 20.

The outdoor unit 10 includes at least one compressor 2 for compressing a refrigerant introduced into the compressor 2 to discharge a high-pressure gas refrigerant, an accumulator 3 for separating a gas refrigerant and a fluid refrigerant from each other to prevent the fluid refrigerant from being introduced into the compressor 2 in a state in which the fluid refrigerant is not evaporated, an oil separator (not shown) for collecting oil from the refrigerant discharged from the compressor, an outdoor heat exchanger 4 for exchanging heat with outdoor air to condense or evaporate the refrigerant, an outdoor unit fan 5 for introducing air into the outdoor heat exchanger 4 to more smoothly perform heat exchange between the outdoor heat exchanger 4 and the air and discharging the heat-exchanged air outdoors, a four-way valve 7 for changing the flow channel of the refrigerant based on the operation mode of the outdoor unit 10, an outdoor electronic expansion valve 6 configured to be controlled based on sub-cooling and superheating in a heating operation, at least one pressure sensor (not shown) for measuring pressure, at least one temperature sensor (not shown) for measuring temperature, and a control device (not shown) for controlling the operation of the outdoor unit and communicating with other units.

In a cooling operation of the air conditioner, the outdoor heat exchanger 4 acts as a condenser for suctioning a gas refrigerant and condensing the suctioned gas refrigerant using outdoor air. In a heating operation of the air conditioner, on the other hand, the outdoor heat exchanger 4 acts as an evaporator for suctioning a liquid refrigerant and evaporating the suctioned liquid refrigerant using outdoor air.

The outdoor unit fan 5 includes an outdoor unit fan motor 5b for generating driving force under the control of the control device (not shown) of the outdoor unit 10 and an outdoor fan 5a rotated by the driving force from the outdoor unit fan motor 5b to generate blowing force.

Meanwhile, In the cooling operation of the air conditioner, an indoor heat exchanger 8 acts as an evaporator for suctioning a liquid refrigerant and evaporating the suctioned liquid refrigerant using air in the room in which the indoor unit 20 that has requested the cooling operation is installed, to cool the indoor air. In the heating operation of the air conditioner, on the other hand, the indoor heat exchanger 8 acts as a condenser for suctioning a gas refrigerant and condensing the suctioned gas refrigerant using air in the room in which the indoor unit 20 that has requested the heating operation is installed, to increase the temperature of the indoor air.

An indoor unit fan 9 includes an indoor unit fan motor 9b for generating driving force under the control of a control device (not shown) of the indoor unit 20 and an indoor fan 9a connected to the indoor unit fan motor 9b such that the indoor fan 9a is rotated by the driving force from the indoor unit fan motor 9b to generate blowing force.

The air conditioner may be constituted as a cooler for cooling the room. Alternatively, the air conditioner may be constituted as a heat pump for cooling or heating the room.

The remote control unit 40 receives data from the indoor unit 20 to display an operation state of the indoor unit, and transmits input data to the indoor unit 20 to control the indoor unit 20 to be operated according to a predetermined setting. In addition, in a case in which the indoor unit 20 or the outdoor unit 10 is abnormal, the remote control unit 40 displays an warning corresponding thereto on a screen.

The remote controller 30 is connected to the indoor unit 20 in a wired or wireless fashion to transmit operation setting data to the indoor unit 20. The remote controller 30 allows operation schedules of the indoor unit 20 as well as operation settings, such as modes, temperature, and a flow rate of air, of the indoor unit 20 to be inputted, and transmits the input data to the indoor unit 20 such that the indoor unit 20 can be operated based on the input data. In addition, the remote controller 30 may receive state information from the indoor unit 20, and may display the receive state information of the indoor unit 20.

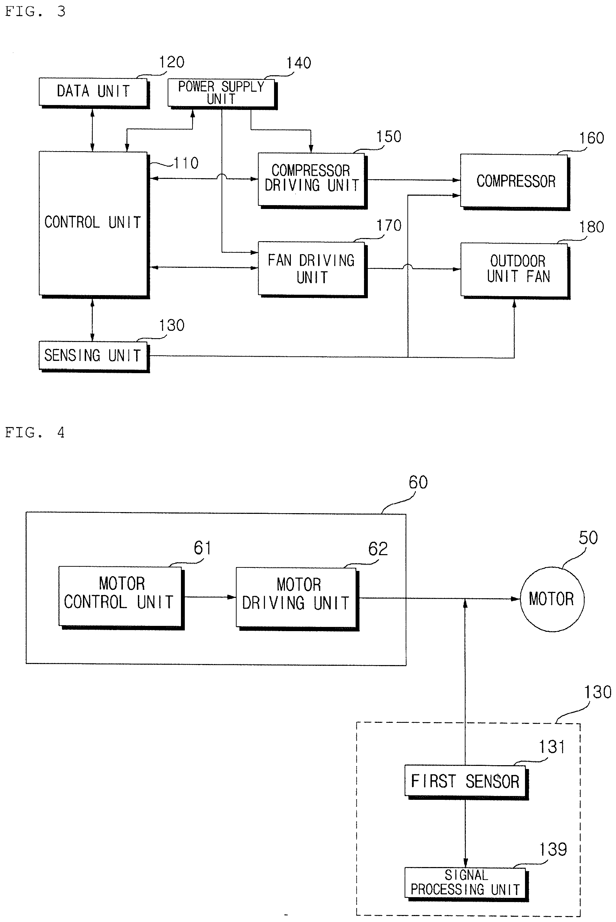

FIG. 3 is a block diagram showing a control construction for sensing abnormality of the compressor or the fan motor of the air conditioner according to the present invention.

Referring to FIG. 3, the outdoor unit 10 includes a power supply unit 140 for supplying electric power, an outdoor unit fan 180, a fan driving unit 170, a compressor 160, a compressor driving unit 150, a data unit 120, and a control unit 110 for controlling overall operation of the outdoor unit 10.

In addition, the outdoor unit 10 further includes a communication unit (not shown) for communicating with the indoor unit 20 and the remote control unit 40. The communication between the outdoor unit 10 and the indoor unit 20 and the communication between the remote control unit 40 and the outdoor unit 10 may be performed using the same communication method or different communication methods in order to transmit data.

The outdoor unit 10 may further include an output unit (not shown) for displaying information about an operation state of the outdoor unit 10. According to circumstances, the control unit 110 of the outdoor unit 10 may transmits data to the indoor unit 20 or the remote control unit 40 such that the data from the outdoor unit 10 can be displayed on a display unit provided in the indoor unit or a display unit provided in the remote control unit 40.

The power supply unit 140 supplies electric power necessary to operate the air conditioner from the outside of the air conditioner. The power supply unit 140 rectifies and smoothes the electric power input to the power supply unit 140, and supplies the rectified and smoothened electric power to the respective units. In addition, the power supply unit 140 may include an overcurrent prevention unit for preventing the damage to the air conditioner due to the input electric power.

Upon receiving operation current supplied from the compressor driving unit 150, the compressor 160 compresses a refrigerant to discharge a high-temperature, high-pressure gas refrigerant.

The compressor driving unit 150 controls the operation of the compressor 160 according to a control command from the control unit 110. In a case in which the compressor 160 is an inverter type compressor, the compressor driving unit 150 controls an operation frequency of the compressor 160.

In a case in which heat exchange between the outdoor heat exchange and the refrigerant is performed, the outdoor unit fan 180 discharges heat-exchange air from the air conditioner.

The fan driving unit 170 controls the operation of the outdoor unit fan 180, and applies operation power to the outdoor unit fan 180, according to the control command from the control unit 110.

The fan driving unit 170 and the compressor driving unit 150 may each include an inverter.

A sensing unit 130 is installed inside or outside the outdoor unit 10 to sense and measure data about the outdoor unit 10 and data about the state of the outdoor unit 10 during the operation of the outdoor unit 10 and to transmit the sensed and measured data to the control unit 110.

The sensing unit 130 may include a plurality of sensors. For example, the sensing unit 130 may include sensors installed inside and outside the outdoor unit 10 for measuring temperature, pressure, humidity, carbon dioxide, flow rate of air, voltage, current.

The control unit 110 controls the compressor driving unit 150 and the fan driving unit 170 based on the data received from the indoor unit 20 or the remote control unit 40 such that the compressor 160 and the outdoor unit fan 180 can be operated.

The control unit 110 generates a control command to vary the operations of the compressor 160 and the outdoor unit fan 180 based on the data input from the sensing unit 130, and applies the generated control command to the compressor driving unit 150 and the fan driving unit 170.

The controller 110 determines whether the compressor 160 and the outdoor unit fan 180 are abnormal based on the data received from the sensing unit 130, and controls a warning corresponding thereto to be output.

Particularly, in a case in which the compressor 160 and the outdoor unit fan 180 are abnormal, with the result that the compressor 160 and the outdoor unit fan 180 cannot be operated any longer, the control unit 110 controls the operation of the air conditioner to be stopped, and controls a warning corresponding thereto to be output.

On the other hand, in a case in which it is determined based on the data received from the sensing unit 130 that the compressor 160 and the outdoor unit fan 180 are abnormal, but the compressor 160 and the outdoor unit fan 180 are can be operated, the control unit 110 controls the operation of the air conditioner to be continuously performed, and controls a warning corresponding thereto to be output.

As previously described, the compressor 160 or the outdoor unit fan 180 is provided with a motor, by driving of which the compressor 160 or the outdoor unit fan 180 is operated. In the following description, motors are provided in the compressor, the outdoor unit fan, and the indoor unit fan.

In addition, the above description was made based on the outdoor unit 10. However, the same may equally apply to the indoor unit 20. In a case in which the indoor unit fan is abnormal, therefore, the abnormality of the indoor unit fan may be sensed, and a warning corresponding thereto may be output.

As shown in FIG. 4, a motor 50 is operated by a driving control unit 60 for controlling the driving of the motor 50.

As shown in FIG. 4, the driving control unit 60 includes a motor control unit 61 for generating a control signal to drive the motor 50 and a motor driving unit 62 for applying operation current to the motor 50 according to the control signal.

The construction of the driving control unit 60 may equally apply to the compressor driving unit 150 and the fan driving unit 170.

In addition, the sensing unit 130 includes a first sensor 131 for sensing operation current applied from the motor driving unit 62 to the motor 50 and a signal processing unit 139 for analyzing data received from the sensor to sense abnormality.

In addition, the sensing unit 130 may further includes a second sensor (not shown) for sensing the motor driving unit 62.

The signal processing unit 139 determines a state and abnormality of the motor 50 based on data sensed by the first sensor 131. In addition, the signal processing unit 139 determines the progress of a breakdown and a breakdown portion of the motor 50 based on a sensed current waveform.

Since the breakdown of the motor 50 does not occur at one time but occurs as the result of accumulation of problems, the sensing unit 130 senses the state of the motor 50 at the breakdown progress step in order to sense abnormality which may occur subsequently.

For example, when the bearing of the motor is excessively worn, gap eccentricity is caused, with the result that the magnetomotive force waveform of the motor is changed.

In a case in which the current waveform received from the first sensor 131 has been changed, the signal processing unit 139 determines a state of the motor based thereon.

In addition, in a case in which a stator of the motor is abnormal, mechanical vibration is generated from the motor, with the result that a specific current frequency of the stator is generated. When the operation current is sensed by the first sensor 131, the current frequency generated from the motor is also sensed.

In a case in which such a current frequency is included in the operation current sensed by the first sensor 131, the signal processing unit 139 determines that the stator is abnormal, and transmits data about the breakdown position to the control unit 110.

In addition, in a case in which the current waveform of the operation current sensed by the first sensor 131 has been changed, the signal processing unit 139 determines that the bearing is abnormal, and transmits data about the breakdown position to the control unit 110.

The sensing unit 130 may further an additional communication module (not shown) and a memory.

The signal processing unit 130 may transmit data to the control unit 110 through the communication module in a wireless communication fashion. Alternatively, the signal processing unit 130 may be connected to the outdoor unit or the indoor unit via a communication cable to transmit data to the control unit 110.

The controller 110 is operated based on the data received from the sensing unit 130. In a case in which the motor is abnormal with the result that the motor cannot be operated, the controller controls the motor not to be operated. On the other hand, in a case in which the motor is abnormal but the motor can be operated, the controller controls a warning corresponding thereto to be output. In a case in which no display unit is provided in the outdoor unit, the control unit 110 may transmit the data to the remote control unit or the indoor unit such that the warning can be displayed on the remote control unit side or the indoor unit side. In addition, in a case in which the indoor unit is a ceiling mounted type indoor unit, the indoor unit may transmit the data to the remote control unit or the remote controller such that the warning can be displayed on the remote control unit side or the remote controller side.

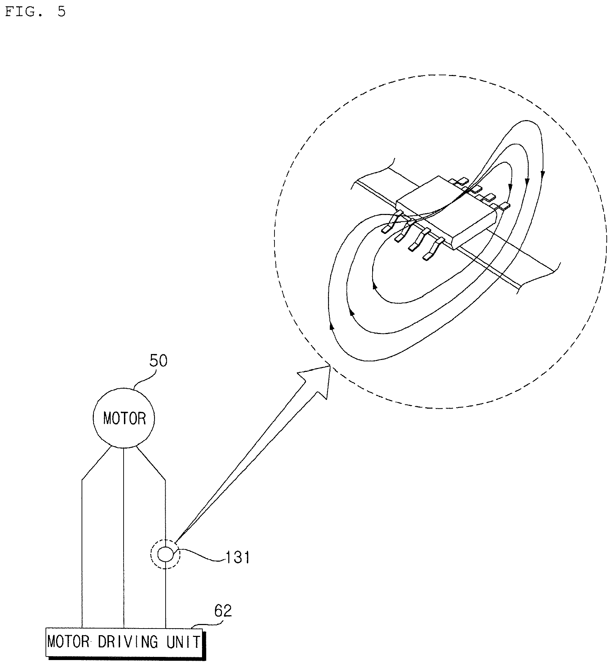

FIG. 5 is a view showing an installation example of the sensing unit of the air conditioner according to the present invention.

As shown in FIG. 5, the sensing unit 130 may be installed on a power cable that is connected to the compressor, the indoor unit, or the indoor unit fan.

The sensing unit 130 is detachably attached to the power cable. The sensing unit 130 is configured to surround the power cable.

For example, the sensing unit 130 may be configured to have a clip shape such that the sensing unit 130 can be mounted on the power cable, which is connected to the motor.

Alternatively, the sensing unit 130 may be mounted on the power cable in a state in which the sensing unit 130 is not directly connected to the power cable. That is, the sensing unit 130 may be disposed at the power cable in a state in which the sensing unit 130 is spaced apart from the power cable by a predetermined distance.

The first sensor 131 is mounted on one of the three-phase power lines connected from the motor driving unit 62 to the motor 50 to sense the operation current flowing along the power cable in a non-contact fashion. At this time, the first sensor senses current using an induced current.

The signal processing unit 139 analyzes the sensed current, and transmits data about the state of the motor to the control unit 110.

The control unit 110 determines whether to continuously operate the motor based on the data received from the signal processing unit 139, and control a warning corresponding thereto to be output.

Upon determining based on the received data that the motor has broken down, and the predetermined operation of the motor cannot be performed, the control unit 110 controls the operation of the motor to be stopped, and controls an error related thereto to be output.

In addition, upon determining based on the received data that the motor is abnormal but the motor can be operated, the controller 110 controls the operation of the air conditioner to be continuously performed, and controls an warning corresponding thereto to be output such that the user can check the state of the motor.

Based on the state of the motor, e.g. whether the motor has broken down or the motor is abnormal but has not yet broken down, the controller 110 controls different warnings to be output such that the user can check the state of the motor.

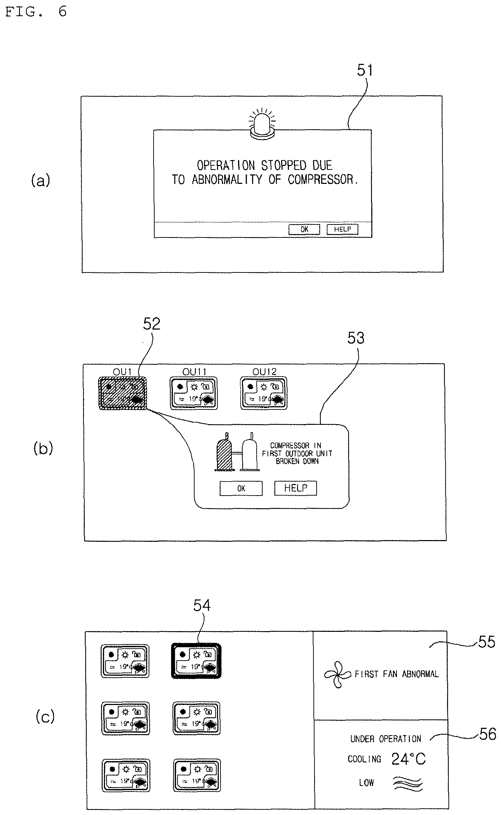

FIG. 6 is a view showing an example of a warning output from the air conditioner according to the present invention.

As shown in FIG. 6, an warning about abnormality of the compressor or the outdoor unit fan of the outdoor unit or the indoor unit fan of the indoor unit may be output through the remote control unit 40. As previously described, the warning may also be output through the display unit of the indoor unit or the remote controller.

In a case in which one selected from among the compressor 160 or 2, the outdoor unit fan 180 or 5, and the indoor unit fan 9 is abnormal, the sensing unit 130 senses the abnormality and transmits data about the abnormality to the control unit 110. The control unit 110 controls the operation of the air conditioner based on the data about the abnormality, and controls a warning corresponding thereto to be output.

As shown in FIG. 6(a), a warning message 51 may be displayed on display unit in the form of a popup window.

Upon determining that the operation of the air conditioner cannot be continuously performed any longer based on the data about the abnormality sensed by the sensing unit 130, the controller 110 controls the operation of the air conditioner to be stopped, and controls a warning message about the breakdown and the stop of the air conditioner to be generated and output.

At this time, a help button for displaying an additional description of the breakdown and a help message may be further displayed on the screen.

In addition, as shown in FIG. 6(b), the abnormality of one selected from among the units, i.e. the outdoor unit and the indoor unit, is displayed on the remote control unit 40 such that an icon 52 of the corresponding unit is distinguished from icons of the other units, and a warning message 53 corresponding thereto is also displayed on the remote control unit 40.

Meanwhile, as shown in FIG. 6(c), the abnormal unit 54 is displayed such that the abnormal unit 54 is distinguished from the other units. In a case in which the abnormality is not related to the operation of the air conditioner or in a case in which the abnormality is not serious to such an extent that it is necessary to stop the operation of the air conditioner, however, the operation of the air conditioner is continuously performed. As a result, operation information 56 may be displayed on the screen, and a warning message 55 about the generated abnormality may be displayed on a portion of the screen.

In the air conditioner according to the present invention, therefore, it is possible to sense a breakdown that has occurred and to specify the breakdown position, and, in addition, it is also possible to sense the progress of a breakdown that will occur in advance and to prepare for the breakdown of the air conditioner.

As is apparent from the above description, in the air conditioner according to the present invention, the state of the motor is sensed using the non-contact type sensor, whereby it is possible to easily monitor the states of the compressor and the fan without modifying conventional air conditioners, to sense the progress of the abnormality of the compressor and the fan or whether the compressor and the fan have broken down, and to estimate the expected lifespan of the compressor or the fan based on the state thereof using the monitored results. Consequently, it is possible to prevent the damage to the air conditioner due to abnormality of the compressor or the fan motor.

## Claims

1. An air conditioner comprising:
a display unit for displaying an operation state of the air conditioner;
a motor (50) configured to be rotated to generate driving force;
a driving control unit (60) for controlling driving of the motor;
a sensing unit for sensing abnormality of the motor; and
a control unit (110) for controlling an operation of the air conditioner based on data received from the sensing unit,
wherein
the sensing unit is mounted on a power cable, in which operation current supplied from the driving control unit to the motor flows, for sensing the operation current to sense a breakdown and an operation state of the motor, and
the display unit for outputzing the operation state of the motor in response to a control command from the control unit and outputting a warning message if there is an abnormality generated in the motor,
wherein the sensing unit comprises:
a sensor for sensing the operation current flowing in the power cable; and
a signal processing unit for determining the operation state or the abnormality of the motor based on the operation current sensed by the sensor,
**characterized in that** in a case in which a current waveform of the operation current in the power cable sensed by the sensor has been changed, the signal processing unit is configured to transmit data thereabout to the control unit.

2. The air conditioner according to claim 1, wherein the air conditioner comprise a compressor, and the motor is provided in the compressor..

3. The air conditioner according to claim 1 or 2, wherein the sensing unit is detachably attached to one selected from among three-phase power lines connected to the motor.

4. The air conditioner according to claim 1, 2, or 3, wherein the sensing unit is configured to surround the power cable.

5. The air conditioner according to any one of claims 1 to 4, wherein the sensing unit is not electrically connected to the power cable but is spaced apart from the power cable by a predetermined distance to sense the operation current flowing in the power cable using an induced current.

6. The air conditioner according to claim 5, wherein the sensing unit is configured to have a clip shape such that the sensing unit can be mounted on the power cable.

7. The air conditioner according to claim 1, wherein, in a case in which the current waveform of the operation current in the power cable sensed by the sensor has been changed, the signal processing unit is configured to determine that the bearing is worn and to transmit data about a breakdown position to the control unit.

8. The air conditioner according to claim 1, wherein, in a case in which a specific current frequency is contained in the operation current in the power cable sensed by the sensor, the signal processing unit is configured to transmit data thereabout to the control unit.

9. The air conditioner according to claim 8, wherein, in a case in which the specific current frequency is contained in the operation current in the power cable sensed by the sensor, the signal processing unit is configured to determine that a stator in the motor is abnormal and to transmit data about a breakdown position to the control unit.

10. The air conditioner according to claim 8, wherein, upon determining based on the data received from the signal processing unit that the motor has broken down, the control unit is configured to control the operation of the air conditioner to be stopped and to control a warning to be output through the display unit.

11. The air conditioner according to claim 8, wherein, upon determining based on the data received from the signal processing unit that an abnormal current or an abnormal frequency is contained in the operation state of the motor, the control unit is configured to control the operation of the air conditioner to be continuously performed and to control a warning related to the abnormality of the motor to be output through the display unit.

12. The air conditioner according to claim 8, wherein, upon determining that the data received from the signal processing unit are data generated due to the abnormality of the motor, the control unit is configured to control the data to be transmitted to an indoor unit such that a warning is output through the indoor unit.

13. The air conditioner according to any one of claims 1 to 12, wherein, in a case in which the motor is abnormal, the display unit is configured to differently display a warning message about a breakdown that has already occurred and a warning message about the abnormality of the motor in response to the control command from the control unit.

## Patentansprüche

1. Klimaanlage mit:
einer Anzeigeeinheit zum Anzeigen eines Betriebszustands der Klimaanlage;
einem Motor (50), der konfiguriert ist, gedreht zu werden, um eine Antriebskraft zu erzeugen;
einer Antriebssteuereinheit (60) zum Steuern des Antriebs des Motors;
einer Abtasteinheit zum Abtasten eines anormalen Zustands des Motors; und
einer Steuereinheit (110) zum Steuern eines Betriebs der Klimaanlage beruhend auf Daten, die von der Abtasteinheit empfangen werden,
wobei
die Abtasteinheit an einem Stromkabel angebracht ist, in dem ein Betriebsstrom fließt, der von der Antriebssteuereinheit dem Motor zugeführt wird, zum Abtasten des Betriebsstroms, um eine Betriebsstörung und einen Betriebszustand des Motors abzutasten, und
die Anzeigeeinheit zum Ausgeben des Betriebszustands des Motors als Reaktion auf einen Steuerbefehl von der Steuereinheit und zum Ausgeben einer Warnmeldung dient, wenn es einen im Motor erzeugten anormalen Zustand gibt,
wobei die Abtasteinheit aufweist:
einen Sensor zum Abtasten des im Stromkabel fließenden Betriebsstroms; und
eine Signalverarbeitungseinheit zum Feststellen des Betriebszustands des anormalen Zustands des Motors beruhend auf dem durch den Sensor abgetasteten Betriebsstrom, **dadurch gekennzeichnet, dass** in einem Fall, in dem sich eine Stromwellenform des durch den Sensor abgetasteten Betriebsstroms im Stromkabel geändert hat, die Signalverarbeitungseinheit konfiguriert ist, Daten darüber an die Steuereinheit zu senden.

2. Klimaanlage nach Anspruch 1, wobei die Klimaanlage einen Verdichter aufweist und der Motor im Verdichter vorgesehen ist.

3. Klimaanlage nach Anspruch 1 oder 2, wobei die Abtasteinheit abnehmbar an einer ausgewählten unter dreiphasigen Stromleitungen angebracht ist, die mit dem Motor verbunden sind.

4. Klimaanlage nach Anspruch 1, 2 oder 3, wobei die Abtasteinheit konfiguriert ist, das Stromkabel zu umgeben.

5. Klimaanlage nach einem der Ansprüche 1 bis 4, wobei die Abtasteinheit nicht elektrisch mit dem Stromkabel verbunden ist, sondern um einen vorgegebenen Abstand vom Stromkabel beabstandet ist, um den im Stromkabel fließenden Betriebsstrom mittels eines induzierten Stroms abzutasten.

6. Klimaanlage nach Anspruch 5, wobei die Abtasteinheit konfiguriert ist, eine Klammerform aufzuweisen, so dass die Abtasteinheit am Stromkabel angebracht werden kann.

7. Klimaanlage nach Anspruch 1, wobei in einem Fall, in dem sich eine Stromwellenform des durch den Sensor abgetasteten Betriebsstroms im Stromkabel geändert hat, die Signalverarbeitungseinheit konfiguriert ist festzustellen, dass das Lager verschlissen ist und Daten über eine Betriebsstörungsposition an die Steuereinheit zu senden.

8. Klimaanlage nach Anspruch 1, wobei in einem Fall, in dem eine spezifische Stromfrequenz in dem durch den Sensor abgetasteten Betriebsstrom im Stromkabel enthalten ist, die Signalverarbeitungseinheit konfiguriert ist, Daten darüber an die Steuereinheit zu senden.

9. Klimaanlage nach Anspruch 8, wobei in einem Fall, in dem die spezifische Stromfrequenz in dem durch den Sensor abgetasteten Betriebsstrom im Stromkabel enthalten ist, die Signalverarbeitungseinheit konfiguriert ist festzustellen, dass ein Stator im Motor anormal ist, und Daten über eine Betriebsstörungsposition an die Steuereinheit zu senden.

10. Klimaanlage nach Anspruch 8, wobei bei einer auf den von der Signalverarbeitungseinheit empfangenen Daten beruhenden Feststellung, dass der Motor eine Störung aufweist, die Steuereinheit konfiguriert ist, zu steuern, dass der Betrieb der Klimaanlage gestoppt wird, und zu steuern, dass eine Warnung durch die Anzeigeeinheit ausgegeben wird.

11. Klimaanlage nach Anspruch 8, wobei bei einer auf den von der Signalverarbeitungseinheit empfangenen Daten beruhenden Feststellung, dass ein anormaler Strom oder eine anormale Frequenz im Betriebszustand des Motors enthalten ist, die Steuereinheit konfiguriert ist, zu steuern, dass der Betrieb der Klimaanlage kontinuierlich durchgeführt wird, und zu steuern, dass eine Warnung hinsichtlich des anormalen Zustands des Motors durch die Anzeigeeinheit ausgegeben wird.

12. Klimaanlage nach Anspruch 8, wobei bei einer Feststellung, dass die von der Signalverarbeitungseinheit empfangenen Daten Daten sind, die infolge des anormalen Zustands des Motors erzeugt werden, die Steuereinheit konfiguriert ist, zu steuern, dass die Daten an eine Inneneinheit gesendet werden, so dass eine Warnung durch die Inneneinheit ausgegeben wird.

13. Klimaanlage nach einem der Ansprüche 1 bis 12, wobei in einem Fall, in dem der Motor anormal ist, die Anzeigeeinheit konfiguriert ist, auf andere Art und Weise eine Warnmeldung über eine Betriebsstörung, die schon aufgetreten ist, und eine Warnmeldung über den anormalen Zustand des Motors als Reaktion auf den Steuerbefehl von der Steuereinheit anzuzeigen.

## Revendications

1. Climatiseur, comprenant :
une unité d'affichage pour l'affichage d'un état de fonctionnement du climatiseur ;
un moteur (50) destiné à être entraîné en rotation pour générer une force d'entraînement ;
une unité de commande d'entraînement (60) pour commander l'entraînement du moteur ;
une unité de détection destinée à détecter une anomalie du moteur ; et
une unité de commande (110) destinée à commander le fonctionnement du climatiseur sur la base de données reçues de l'unité de détection,
où
l'unité de détection est montée sur un câble électrique, où circule le courant de fonctionnement fourni par l'unité de commande d'entraînement vers le moteur, afin de détecter le courant de fonctionnement pour identifier une panne et l'état de fonctionnement du moteur, et
l'unité d'affichage indique l'état de fonctionnement du moteur en réaction à une instruction de commande de l'unité de commande et émet un message d'alerte si une anomalie est générée dans le moteur,
où l'unité de détection comprend :
un capteur destiné à détecter le courant de fonctionnement circulant dans le câble électrique ; et
une unité de traitement de signaux destinée à déterminer l'état de fonctionnement ou l'anomalie du moteur sur la base du courant de fonctionnement détecté par le capteur, **caractérisé en ce que**, dans le cas d'un changement d'une forme d'onde du courant de fonctionnement dans le câble électrique détectée par le capteur, l'unité de traitement de signaux est prévue pour transmettre des données correspondantes à l'unité de commande.

2. Climatiseur selon la revendication 1, ledit climatiseur comprenant un compresseur, et le moteur étant disposé dans le compresseur.

3. Climatiseur selon la revendication 1 ou la revendication 2, où l'unité de détection est fixée de manière amovible à un fil sélectionné parmi les fils électriques triphasés connectés au moteur.

4. Climatiseur selon la revendication 1, la revendication 2 ou la revendication 3, où l'unité de détection est prévue pour entourer le câble électrique.

5. Climatiseur selon l'une des revendications 1 à 4, où l'unité de détection n'est pas raccordée électriquement au câble électrique, mais est espacée d'une distance définie du câble électrique pour détecter le courant de fonctionnement circulant dans le câble électrique au moyen d'un courant induit.

6. Climatiseur selon la revendication 5, où l'unité de détection est prévue pour présenter une forme en circlip telle que ladite unité de détection peut être montée sur le câble électrique.

7. Climatiseur selon la revendication 1, où, dans le cas dans le cas d'un changement de la forme d'onde du courant de fonctionnement dans le câble électrique détectée par le capteur, l'unité de traitement de signaux est prévue pour déterminer que le palier est usé et pour transmettre à l'unité de commande les données relatives à un emplacement de panne.

8. Climatiseur selon la revendication 1, où, dans le cas où une fréquence de courant spécifique est présentée dans le courant de fonctionnement du câble électrique détecté par le capteur, l'unité de traitement de signaux est prévu pour transmettre des données correspondantes à l'unité de commande.

9. Climatiseur selon la revendication 8, où, dans le cas où la fréquence de courant spécifique est présentée dans le courant de fonctionnement du câble électrique détecté par le capteur, l'unité de traitement de signaux est prévue pour déterminer qu'un stator du moteur est défaillant et pour transmettre à l'unité de commande les données relatives à un emplacement de panne.

10. Climatiseur selon la revendication 8, où, par détermination que le moteur est tombé en panne sur la base des données reçues de l'unité de traitement de signaux, l'unité de commande est prévue pour commander l'arrêt du fonctionnement du climatiseur et l'émission d'une alerte sur l'unité d'affichage.

11. Climatiseur selon la revendication 8, où, par détermination sur la base des données reçues de l'unité de traitement de signaux qu'un courant anormal ou une fréquence anormale sont présentés en état de fonctionnement du moteur, l'unité de commande est prévue pour commander le fonctionnement continu du climatiseur et l'émission d'une alerte relative à l'anomalie du moteur sur l'unité d'affichage.

12. Climatiseur selon la revendication 8, où, par détermination que les données reçues de l'unité de traitement de signaux sont des données générées en raison de l'anomalie du moteur, l'unité de commande prévue pour commander la transmission des données vers une unité intérieure de sorte qu'une alerte est émise par l'unité intérieure.

13. Climatiseur selon l'une des revendications 1 à 12, où, dans le cas d'une anomalie du moteur, l'unité d'affichage est prévue pour afficher de manière différenciée un message d'alerte relatif à une panne qui s'est déjà produite et un message d'alerte relatif à l'anomalie du moteur en réaction à l'instruction de commande de l'unité de commande.
